# EUROPEAN PATENT APPLICATION

(11) **EP 3 808 645 A1**
(43) Date of publication of application: **21.04.2021**
(21) Application number: 19212107.7
(22) Date of filing: 28.11.2019
(51) Int. Cl.: B62M 9/10

(54) **BICYCLE CASSETTE WITH INCREASED TOOTH RATIO**

(30) Priority: 17.10.2019 TW 108213721 U
(71) Applicant: Li, Yuan-Shun, Taichung City 421 (TW)
(72) Inventor: Li, Yuan-Shun, Taichung City 421 (TW)
(74) Representative: Brown, Michael Stanley

(57) **Abstract**

A bicycle cassette with increased tooth ratio includes a driver body (10) connected to a rear hub, and multiple cogs (13-18, 20) which are sequentially mounted to the driver body (10) with equal spacing. An additional cog (40) is mounted to the driver body (10) and located opposite to the rear hub. The additional cog (40) has 8-10 teeth. The tooth ratio is increased by the additional cog (40) and the chainring to break through the limitation of tooth ratio of existing bicycle cassettes, and to increase the number of the gears of the bicycle cassette.

## Description

### BACKGROUND OF THE INVENTION

### 1. Field of the Invention

The present invention relates to bicycles and more particularly to a bicycle derailleur cassette.

### 2. Description of the Related Art

The conventional bicycle rear cassette generally includes a driver body which is integrally formed with the rear hub, and multiple cogs mounted to the driver body with a spacer located between each two adjacent cogs so that theses cogs are evenly spaced from each other. These cogs are mounted to the driver body in tooth-number sequence. The inner periphery of the driver body is coupled with the axle of the rear hub and the bearings, so that the minimum diameter and the maximum diameter of the driver body have to be maintained. The shape and size of the cogs of the cassette have a specific regulation. The inner diameter of the cassette is limited by the minimum diameter of the driver body, so that the smallest cog of the cassette is restricted as well. In the current bicycle industry, the minimum number of the teeth of the cogs is 11 which becomes the extreme number of the teeth for the cassette.

Take the road bicycles with an eighteen-gear derailleur system as an example, the system includes a 50/34 T compact crankset, and the rear cassette has 11-23 teeth. The tooth ratio is illustrated as follows:

| CASSETTES \ CHAINRING | 11 | 12 | 13 | 14 | 15 | 17 | 19 | 21 | 23 |
|---|---|---|---|---|---|---|---|---|---|
| 50 | 4.55 | 4.17 | 3.85 | 3.57 | 3.33 | 2.94 | 2.63 | 2.38 | 2.17 |
| 34 | 3.09 | 2.83 | 2.62 | 2.43 | 2.27 | 2.00 | 1.79 | 1.62 | 1.48 |

The tooth ratio is related with the revolutions per minute of the pedal that the user operates. A larger tooth ratio can drive the bicycle at a higher speed for the same number of revolutions per minute of the pedal that the user operates. With a larger tooth ratio, the user needs to have stronger muscles, and has less cardiopulmonary burden. On the contrary, a smaller tooth ratio requires a higher number of revolutions per minute of the pedal that the user operates. With a smaller tooth ratio, the user does not require as strong muscles and, however, has more cardiopulmonary burden.

If the tooth ratio is to be changed, the change of the chainring is related to Bolt Circle Diameter (BCD). The crank may need to be replaced if the BCD does not fit, and this leads to higher expenses. The mainstream of the popular chainrings is 50/34 T or 52/36 T, while 53/39 T is barely used.

The present invention is intended to change the minimum number of teeth of the smallest cog so as to increase the tooth ratio and keeping it compatible with the existing chainrings.

### SUMMARY OF THE INVENTION

The present invention relates to a bicycle derailleur cassette with increased tooth ratio, which comprises a driver body connected to a rear hub. Multiple cogs are sequentially mounted to the driver body with equal spacing. The least number of the teeth among the cassettes is 11. An additional cog is mounted to the driver body and located opposite to the rear hub. The additional cog has 8-10 teeth.

The advantages of the present invention are that the present invention adds an additional cog to the existing bicycle cassette and the added cog has a teeth number less than 11, preferably 10. The tooth ratio is increased by the additional cog and the chainring to break through the limitation of tooth ratio of existing bicycle and to increase the gears of the bicycle cassette.

The additional cog is compatible with the existing driver body so that no change is needed of the existing driver body.

The additional cog is connected to the driver body and spaced from the next cog so that the chain is able to smoothly switch between the cogs.

The present invention will become more obvious from the following description when taken in conjunction with the accompanying drawings which show, for purposes of illustration only, a preferred embodiment in accordance with the present invention.

### BRIEF DESCRIPTION OF THE DRAWINGS

Fig. 1 is an exploded view of the bicycle cassette of the present invention, as viewed from the front end thereof;
Fig. 2 is another exploded view of the bicycle cassette of the present invention, as viewed from the rear end thereof;
Fig. 3 is a front perspective view of the first cog of the bicycle cassette of the present invention;
Fig. 4 is a rear perspective view of the first cog of the bicycle cassette of the present invention;
Fig. 5 is a front perspective view of the additional cog of the bicycle cassette of the present invention;
Fig. 6 is a rear perspective view of the additional cog of the bicycle cassette of the present invention;
Fig. 7 is a front perspective view of the bicycle cassette of the present invention;
Fig. 8 is a front view of the bicycle cassette of the present invention;
Fig. 9 is a cross sectional view of the bicycle cassette of the present invention, and
Fig. 10 is an enlarged view of the circled portion in Fig. 9.

### DETAILED DESCRIPTION OF THE PREFERRED EMBODIMENT

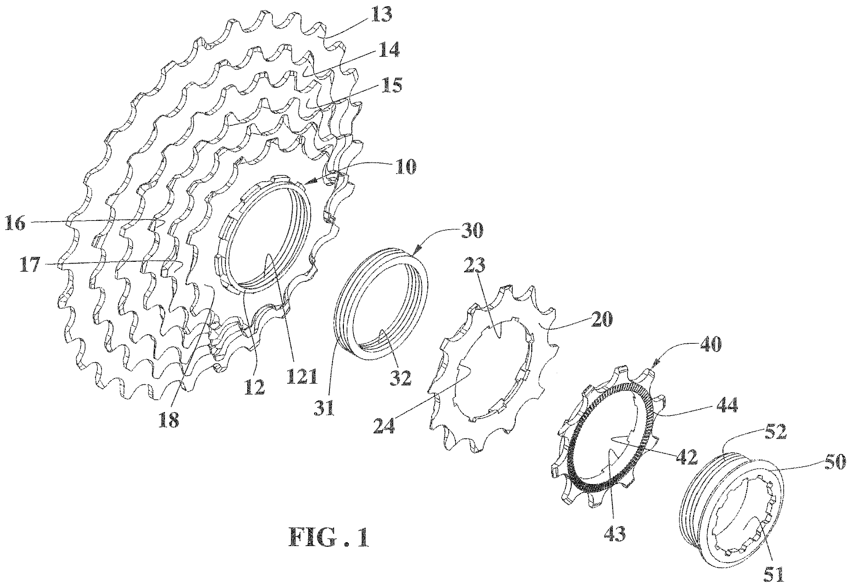

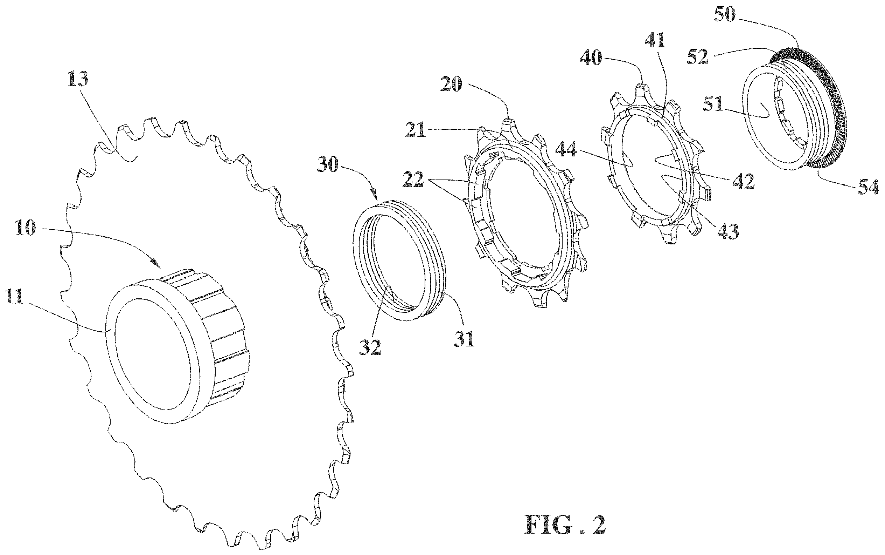

Referring to Figs. 1 and 2, the bicycle cassette of the present invention comprises a driver body 10 having a first end 11 and a second end 12 located opposite to the first end 11. The first end 11 of the driver body 10 is connected to the rear hub (not shown). An additional cog 40 having ten teeth is connected to the second end 12 of the driver body 10. Multiple cogs 13-18 (i.e. 13, 14, 15, 16, 17 and 18) are sequentially mounted to the driver body 10 with equal spacing in order of increasing number of teeth from the second end 12 towards the first end 11. The inside of the driver body 10 is well known in the art and will not be described here.

The bicycle cassette of the present invention achieves an increased tooth ratio compared to conventional bicycle cassette.

The driver body 10 comprises a first threaded portion 121 defined in the inner periphery of the second end 12 of the driver body 10.

A tapered ring 30 has a second threaded portion 31 defined in the outer periphery thereof, and the first threaded portion 121 is threadedly connected to the second threaded portion 31 of the tapered ring 30 to connect the tapered ring 30 to the inner periphery of the second end 12 of the driver body 10. The tapered ring 30 includes a third threaded portion 32 defined in the inner periphery thereof. The tapered ring 30 is used to reduce the inner diameter of the driver body 10.

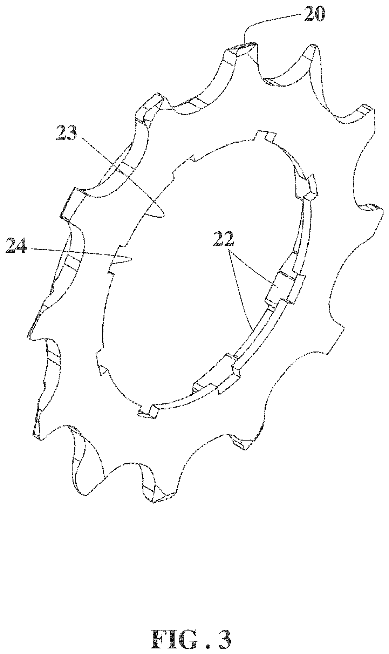

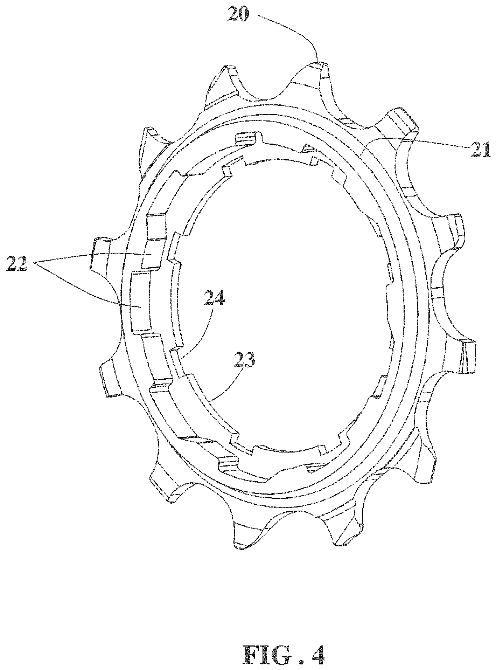

As shown in Figs. 3 and 4, a first cog 20 having eleven teeth includes an annular flange 21 extending from the rear end thereof. The flange 21 includes an engaging portion 22 in the form of ridge-recess defined in the inner periphery thereof so as to be engaged with the outer periphery of the driver body 10. The flange 21 is connected to the outer periphery of the second end 12 of the driver body 10. Multiple first protrusions 23 and multiple first recesses 24 are radially and alternatively formed in the inner periphery of the first cog 20. The first protrusions 23 contact the second end 12 of the driver boy 10 and the outer face of the tapered ring 30.

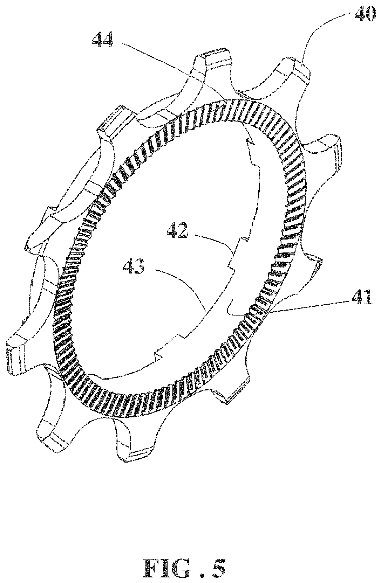

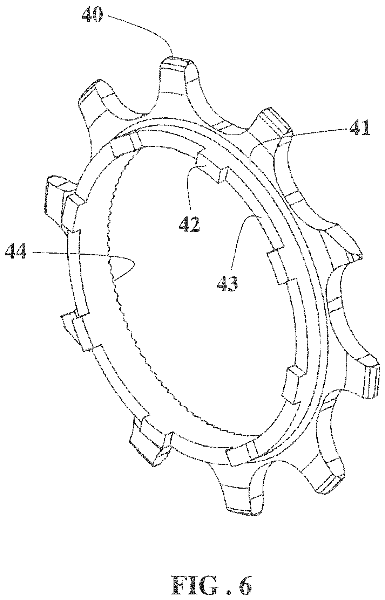

As shown in Figs. 5, 6, the additional cog 40 has at least one tooth less than the number of teeth of the first cog 20. Preferably, the additional cog 40 has 8 to 10 teeth. The additional cog 40 has an annular lip 41 extending axially from the rear end thereof, and multiple second protrusions 42 and multiple second recesses 43 are axially and alternatively formed in the annular lip 41. The second protrusions 42 of the additional cog 40 are engaged with the first recesses 24 of the first cog 20, and the first protrusions 23 of the first cog 20 are engaged with the second recesses 43 of the additional cog 40, such that the additional cog 40 is engaged with the first cog 20 and located outside of the second end 12 of the driver body 10. By the annular lip 41, the additional cog 40 is spaced from the first cog 20 properly to meet the needs for switching of the chain.

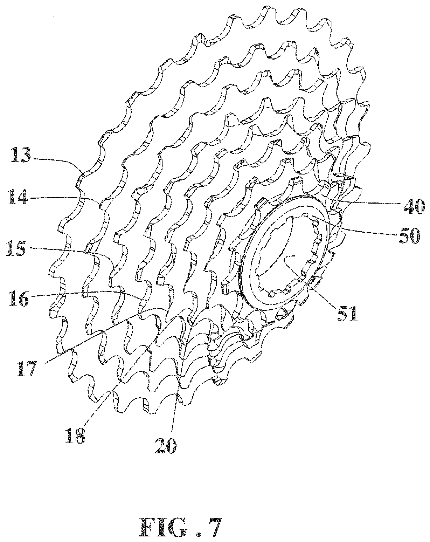

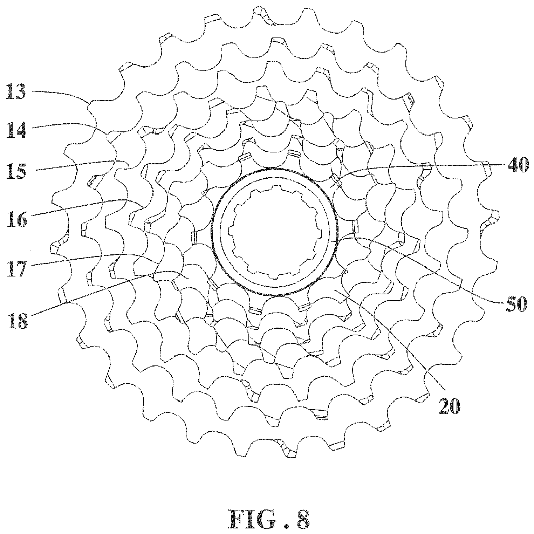

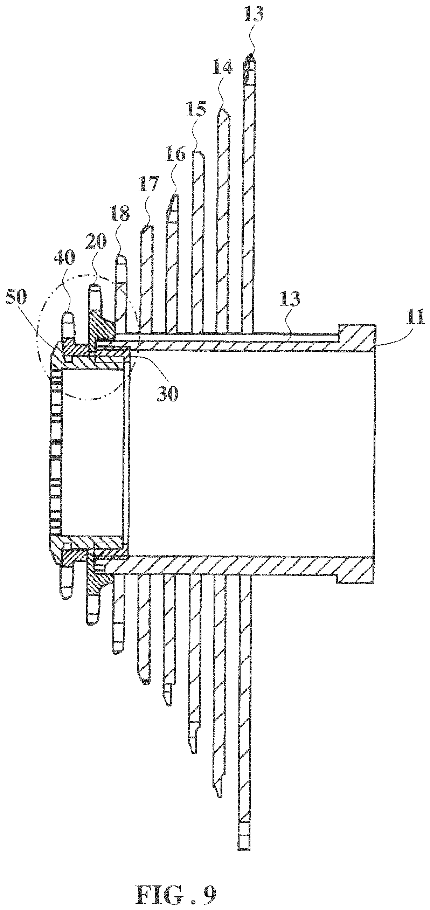

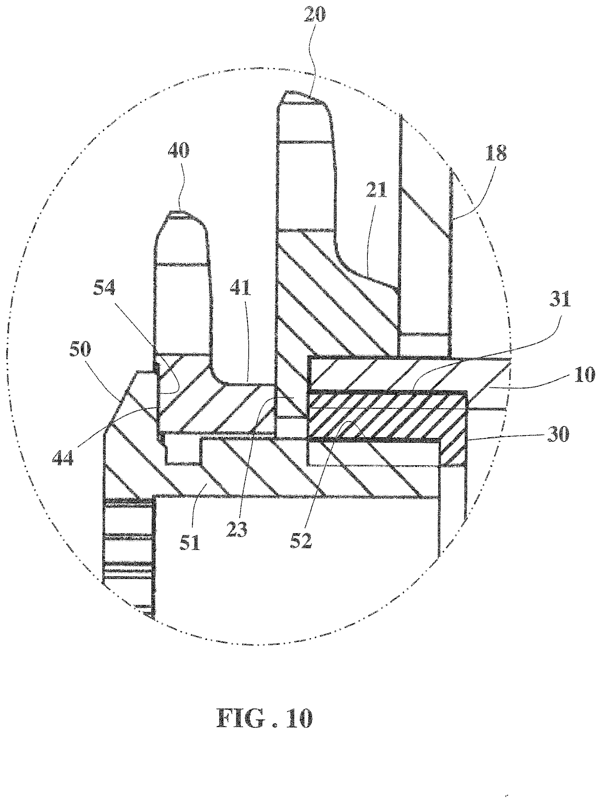

As shown in Figs. 7 to 10, a cap 50 is a ring-shaped cap and has a tubular portion 51 extending axially from the rear end thereof. The tubular portion 51 extends through the additional cog 40 and includes a fourth threaded portion 52 defined in the outer periphery thereof. The fourth threaded portion 52 is located close to the distal end of the tubular portion 51. The fourth threaded portion 52 of the tubular portion 51 is threadedly connected to the third threaded portion 32 of the tapered ring 30. The cap 50 is located at one side of the additional cog 40 to position all of the cogs 13-18 to the driver body 10. The additional cog 40 includes a first anti-slip terrain 44 formed on one side thereof, and the cap 50 includes a second anti-slip terrain 54 formed on one side thereof. The first anti-slip terrain 44 and the second anti-slip terrain 54 are engaged with each other.

As shown in Figs. 7 to 10, the present invention adds the additional cog 40 which has less than 11 teeth (preferably ten teeth) to the driver body 10 of the existing bicycle cassette to increase the tooth ratio to break through the limitation of tooth ratio of existing bicycle cassettes. The number of teeth of the additional cog 40 depends on the number of teeth of the first cog 20, preferably, one or two teeth less than the number of teeth of the first cog 20. In this embodiment the smallest cog of the cassette has 11 teeth, so that the additional cog 40 has 10 teeth.

Take the road bicycles with an eighteen-gear derailleur system as an example, the system includes a 50/34 T compact crankset. After the additional cog 40 is added, the tooth ratio is increased and the derailleur system becomes a twenty-gear derailleur system. The tooth ratio is illustrated as follows:

| CASSETTE \ CHAINRING | 10 | 11 | 12 | 13 | 14 | 15 | 17 | 19 | 21 | 23 |
|---|---|---|---|---|---|---|---|---|---|---|
| 50 | 5 | 4.55 | 4.17 | 3.85 | 3.57 | 3.33 | 2.94 | 2.63 | 2.38 | 2.17 |
| 34 | 3.4 | 3.09 | 2.83 | 2.62 | 2.43 | 2.27 | 2.00 | 1.79 | 1.62 | 1.48 |

While we have shown and described the embodiment in accordance with the present invention, it should be clear to those skilled in the art that further embodiments may be made without departing from the scope of the present invention.

## Claims

1. A bicycle derailleur cassette with increased tooth ratio, comprising:
a driver body connected to a rear hub of a bicycle, the driver body having a first end and a second end opposite to the first end, the first end of the driver body connected to the rear hub, a first cog having a minimum number of teeth;
a plurality of cogs sequentially mounted to the driver body with equal spacing, wherein a first cog has a smallest number of teeth among the plurality of cogs;
a tapered ring connected in the second end of the driver body;
multiple first protrusions and multiple first recesses radially and alternatively formed in an inner periphery of the first cog, the first protrusions contacting the second end of the driver boy and an outer face of the tapered ring;
an additional cog having at least one tooth less than the number of teeth of the first cog, the additional cog having an annular lip extending axially from a rear end thereof, multiple second protrusions and multiple second recesses axially and alternatively formed in the annular lip, the second protrusions of the additional cog engaged with the first recesses of the first cog, the first protrusions of the first cog engaged with the second recesses of the additional cog, so that the additional cog is engaged with the first cog and spaced from the first cog by the annular lip, and is located outside of the second end of the driver body; and
a ring-shaped cap located at one side of the additional cog and having a tubular portion extending axially therefrom, the tubular portion extending through the additional cog and fixed to an inner periphery of the tapered ring.

2. The bicycle derailleur cassette with increased tooth ratio as claimed in claim 1, wherein the second end of the driver body includes a first threaded portion defined in an inner periphery thereof, the tapered ring includes a second threaded portion defined in an outer periphery thereof, and the first threaded portion is threadedly connected to the second threaded portion to connect the tapered ring to the inner periphery of the second end of the driver body.

3. The bicycle derailleur cassette with increased tooth ratio as claimed in claim 1, wherein the tapered ring includes a third threaded portion defined in an inner periphery thereof, the tubular portion of the cap includes a fourth threaded portion defined in an outer periphery near a distal end of the tubular portion, and the fourth threaded portion of the tubular portion is threadedly connected to the third threaded portion of the tapered ring.

4. The bicycle derailleur cassette with increased tooth ratio as claimed in claim 1, wherein the additional cog includes 8 to 10 teeth.

5. The bicycle derailleur cassette with increased tooth ratio as claimed in claim 1, wherein the additional cog includes a first anti-slip terrain formed on one side thereof, the cap includes a second anti-slip terrain formed on one side thereof, and the first anti-slip terrain and the second anti-slip terrain are engaged with each other.

6. A bicycle derailleur cassette comprising:
a driver body connected to a rear hub of a bicycle, the driver body having an inner side and an opposite outer side;
multiple cogs sequentially mounted to the driver body with an even space and in order of increasing number of teeth from the outer side to the inner side of the driving body, and
an additional cog mounted to the driver body and located opposite to the rear hub, the additional cog having 8-10 teeth.
